# EUROPEAN PATENT APPLICATION

(11) **EP 4 818 010 A1**
(43) Date of publication of application: **07.10.2026**
(21) Application number: 24898327.2
(22) Date of filing: 24.09.2024
(51) Int. Cl.: B62D 55/04, B62D 55/205

(54) **METHOD FOR MANUFACTURING A TRACK CHAIN LINK CONNECTING ELEMENT WITH BUSHINGS**

(30) Priority: 27.11.2023 RU 2023130947
(71) Applicant: Arutiunian, Valeriia, Yerevan, 0057 (AM)
(72) Inventor: KOZIN, Andrey Yuryevich, Petrozavodsk, 185031 (RU)
(74) Representative: Osmans, Voldemars
(86) International application number: PCT/RU2024/050224
(87) International publication number: WO 2025/116775

(57) **Abstract**

A method of manufacturing a connecting element of a track chain link includes providing an elongated blank made of sheet metal, the blank having first and second ends, forming at least one first hole at the first end and at least one second hole at the second end, positioning first and second inserts having respective shanks so that their shanks are placed in the first and second holes respectively, and forming a bracket-shaped element by bending the first and second ends of the blank around the first and second inserts. A connecting element, an insert for use in the method, a track chain link including such connecting elements, and a track chain formed by such track chain links are also disclosed.

## Description

### FIELD OF THE INVENTION

The invention relates to vehicle engineering, primarily to wheeled vehicles, and more particularly to articulated connections of links of flexible track chains configured to be mounted around an outer periphery of a tire of a vehicle. More specifically, the invention relates to methods of manufacturing connecting elements of a track chain link. The invention also relates to a connecting element of a track chain link, to a structure of an insert used in the connecting element, to a track chain link including said connecting elements, and to a track chain formed by a plurality of such links.

### BACKGROUND OF THE INVENTION

Track chains that can be removably mounted around tires of vehicles are known in several different configurations. For example, a track chain believed to represent the closest prior art to the claimed invention is known and includes track links with lateral supports hinged together by connecting links, as disclosed in Russian Patent No. 2,530,947, entitled "Track Chain Link with Two Lateral Support Elements and Method of Manufacturing a Support Element for Such a Track Chain Link," filed on May 12, 2010. The track links with lateral supports include connecting elements, each of which is a metal strip with bent ends, that is, a bracket.

Such a track chain can be used to provide improved traction between wheels of a vehicle and a travel surface, especially on wet, slippery, or muddy ground. In logging operations, such track chains also make it possible to reduce rut formation and thereby reduce negative impact on the forest environment. Severe operating conditions lead to gradual wear of elements of the track chain, especially the connecting elements. This requires replacement and/or repair of the track chain.

The brackets, that is, the connecting elements, are critical parts of the track chain, and the service life of the track chain directly depends on wear of the brackets. The brackets are made of wear-resistant structural steels. A rectangular strip of sheet metal is used as a blank and is bent at the ends. To increase the service life of track chains, manufacturers increase the thickness of the strip being used.

Wear occurs primarily in the contact area between the bracket and the connecting link. Thus, manufacturing the connecting element, that is, the bracket, entirely from wear-resistant steel is inefficient and leads to an increase in the weight of the final product and in its material consumption. The increase in weight also contributes to increased fuel consumption and increased greenhouse gas emissions.

It should be noted that the wear-resistant steels from which strips for manufacturing the connecting elements, that is, the brackets, are made have poor weldability and require preheating of welded edges to 200-400° C during welding. This complicates both the manufacturing process and the repair process.

One approach for increasing the service life of the connecting element, that is, the bracket, and of the track chain as a whole is to thicken the contact areas between the bracket and the connecting link. An example of such an approach is a track chain distributed under the designation "BERG" [UNI HD TRACK, http://kluch-td.ru/catalog/track-tire/track-tire2_1653.html]. The connecting element of such a track chain is manufactured by casting. However, this complicates the process of manufacturing the connecting element and requires additional machining of the blank after casting.

### SUMMARY OF THE INVENTION

An object of the invention is to provide a new method of manufacturing a connecting element of a track chain link and an improved structure of the connecting element.

The technical effects achieved by the invention include the following.

The service life of the track chain is increased by thickening material of the connecting element of the track chain link at a contact area with a connecting link by reliably fixing inserts in bends of a bracket-shaped element.

Manufacturing and repair of the track chain are simplified due to the possibility of using steels having good weldability for blanks from which the bracket-shaped element is formed, and repair is further simplified due to the possibility of restoring the connecting element by replacing a worn insert.

Material consumption and weight of the track chain are reduced without reducing the service life thereof by thickening only the contact areas of the connecting element with the connecting link and by enabling the use of thinner blanks for forming the bracket-shaped element.

The invention provides a method of manufacturing a connecting element of a track chain link, the method comprising providing an elongated blank made of sheet metal, the blank having a first end and a second end; forming at least one first hole in the blank at the first end and at least one second hole in the blank at the second end; positioning a first insert having a shank so that its shank is placed in the at least one first hole and positioning a second insert having a shank so that its shank is placed in the at least one second hole; and forming a bracket-shaped element by bending the first end of the blank around the first insert and bending the second end of the blank around the second insert.

In one embodiment, the method further comprises pressing portions of a surface of the bracket-shaped element into the inserts such that a surface of an upper portion of the bracket-shaped element facing a respective insert conforms at least partially to a shape of a corresponding upper surface of the respective insert, and a surface of a lower portion of the bracket-shaped element facing the respective insert conforms at least partially to a shape of a corresponding lower surface of the respective insert.

In another embodiment, the pressing is performed simultaneously with bending the first and second ends of the blank.

In another embodiment, the method further comprises heating the blank prior to forming the bracket-shaped element.

The invention also relates to an insert for use in the above-described method of manufacturing the connecting element of the track chain link, the insert comprising a body and a shank, wherein the body has a concave surface on one side and a convex surface on an opposite side, and the shank is disposed on the side of the convex surface.

In one embodiment, the shank comprises a single protruding element extending from the convex surface. In other embodiments, the shank comprises a plurality of protruding elements extending from the convex surface.

In another embodiment, an upper surface and/or a lower surface of the insert includes at least one recess.

In addition, the insert may be made of a wear-resistant material.

The invention also relates to a connecting element of a track chain link, comprising a bracket-shaped element formed by bending first and second ends of an elongated sheet metal blank, wherein the bracket-shaped element has at least one first hole and at least one second hole at opposite ends thereof, a shank of a first insert is positioned in the at least one first hole and a shank of a second insert is positioned in the at least one second hole, and the first end is bent around the first insert and the second end is bent around the second insert.

The invention also relates to a track chain link configured to be connected to a plurality of track chain links to form a flexible track chain configured to be mounted around an outer periphery of a tire of a vehicle, the track chain link comprising a transverse element extending across a tread surface of the tire, two lateral support elements, and two connecting elements, wherein the lateral support elements are disposed at opposite ends of the transverse element, extend from the same side thereof, and are spaced apart to accommodate the tire therebetween, and wherein the connecting elements are configured as bracket-shaped elements formed by bending first and second ends of elongated sheet metal blanks, each bracket-shaped element having at least one first hole and at least one second hole at opposite ends thereof, a shank of a first insert positioned in the at least one first hole and a shank of a second insert positioned in the at least one second hole, the first end being bent around the first insert and the second end being bent around the second insert.

The invention also relates to a track chain configured to be mounted around an outer periphery of a tire of a vehicle, the track chain comprising a plurality of track chain links connected to one another in series by connecting links, wherein each track chain link comprises a transverse element extending across a tread surface of the tire, two lateral support elements disposed at opposite ends of the transverse element and extending from the same side thereof and spaced apart to accommodate the tire therebetween, and two connecting elements as described above.

### BRIEF DESCRIPTION OF THE DRAWINGS

The invention is illustrated by the drawings, in which:
FIG. 1 is a general view of a preferred embodiment of a connecting element of a track chain link.
FIG. 2 is a top view of the connecting element of the track chain link shown in FIG. 1.
FIG. 3 is a general view of an insert according to a preferred embodiment of the invention.
FIG. 4 is a top view of the insert according to the embodiment of the invention shown in FIG. 3.
FIG. 5 is a general view of a preferred embodiment of a blank with holes for manufacturing a connecting element of a track chain link.
FIG. 6 is an assembled view of a track chain link, in which the inserts and the holes in the bracket-shaped elements are not shown.

### DETAILED DESCRIPTION OF THE EMBODIMENTS

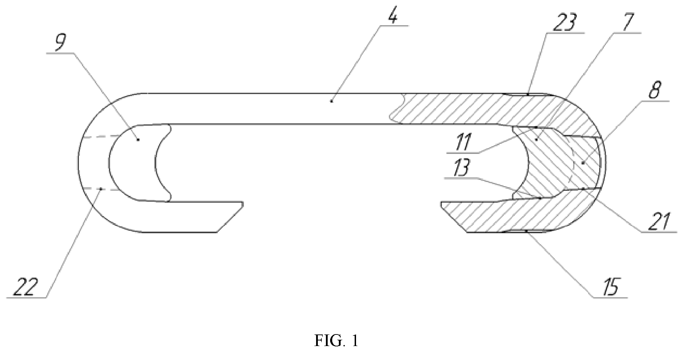

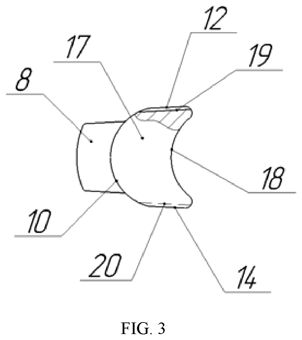

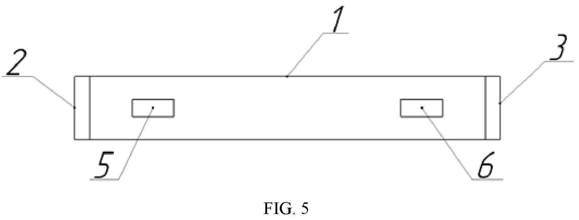

A method of manufacturing a connecting element of a track chain link according to an embodiment of the invention comprises providing an elongated blank 1 made of sheet metal (FIG. 5), the blank 1 having a first end 2 and a second end 3, and forming a bracket-shaped element 4 by bending the first end 2 and the second end 3 of the blank 1 (FIG. 1). Before forming the bracket-shaped element 4, at least one first hole 5 is formed in the blank 1 at the first end 2, and at least one second hole 6 is formed in the blank 1 at the second end 3 (FIG. 5). The first end 2 of the blank 1 is bent around a first insert 7, a shank 8 of which has been previously positioned at least in the first hole 5 (FIG. 3), and the second end 3 of the blank 1 is bent around a second insert 9 (FIG. 1), a shank of which has been previously positioned at least in the second hole 6.

In a preferred embodiment, the blank 1 has a rectangular shape, but may be formed, for example, as a rectangle with rounded corners, an oval, or another known elongated shape. The blank 1 may be obtained from a metal sheet or strip by laser cutting, plasma cutting, blanking in a die, or another known method.

Wear-resistant steel may be used as a material for the blank 1, but in a preferred embodiment it is expedient to use a structural steel suitable for welded structures without requiring additional heat treatment, for example, 09G2S steel, also referred to as 09Mn2Si steel. This not only makes it possible to reduce the cost of manufacturing the finished product, but also facilitates assembly and subsequent repair of track chain links.

The holes 5 and 6 in the blank 1 (FIG. 5) may be formed using laser cutting, punching in a die, drilling, or another known method. In a preferred embodiment, the holes 5 and 6 have a rectangular shape, but may have another shape, in particular a circular, square, oval, or other shape. The number of holes at the ends of the blank 1 may vary; for example, two or more holes may be provided, but in a preferred embodiment one hole is provided at each end. In a preferred embodiment, the holes 5 and 6 at the ends of the blank 1 are formed at future bend locations.

The inserts 7, 9 may be manufactured by forging, stamping, casting, powder metallurgy followed by hardening, or any other known method.

When the ends of the blank 1 are bent, due to deformation of the metal caused by bending, the shank 8 of the insert 7, and similarly a shank of the insert 9, is securely clamped and the insert is fixed at a location of future contact with a connecting link in the track chain. The blank 1 at the bending locations conforms to the convex surface 10 (FIGS. 1 and 3) of the insert 7. The bending of the ends 2 and 3 of the blank 1 may be performed either sequentially, for example, first bending the end 2 and then the end 3, or simultaneously. This operation may be performed, for example, using a hydraulic press or a crank press.

Additionally, the inserts 7, 9 may be welded to the bracket-shaped element 4 in order to increase the structural reliability of the connecting element of the track chain. A weld seam may be formed between a body, for example the body 17, of the insert and a surface of the bracket-shaped element, and/or the shanks, for example the shank 8, of the inserts 7, 9 may be tack welded in the holes 21, 22.

Positioning the inserts 7 and 9 at locations of contact with connecting links in the track chain makes it possible to use thinner metal for the blank 1, thereby reducing the overall material consumption and weight of the track chain without reducing its service life. As a result, fuel consumption during operation may be reduced, along with related effects such as reduced greenhouse gas emissions and facilitated transportation.

The inserts 7 and 9 make it possible to increase the service life of the track chain by thickening the material at the location of contact between the connecting element and the connecting link, which is most susceptible to wear during movement of the vehicle.

In addition, the inserts make it possible to simplify repair, or restoration, of the track chain, which includes removing a worn insert and installing a new insert in its place.

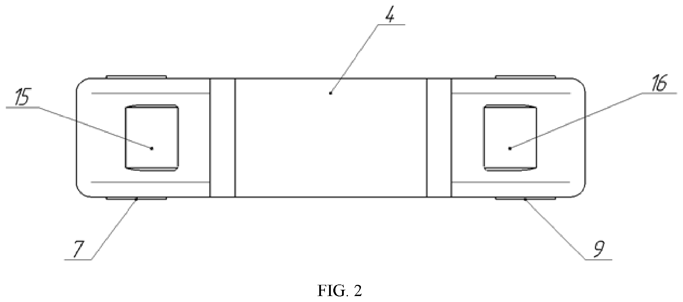

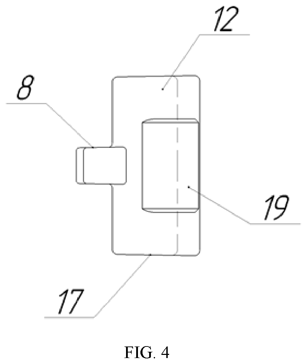

In a preferred embodiment, portions of a surface of the bracket-shaped element 4 are additionally pressed into the inserts 7, 9 such that a surface 11 of an upper portion of the bracket-shaped element 4 facing the insert 7 (FIG. 1) conforms at least partially to a shape of a surface 12 of an upper portion of the insert 7 (FIG. 3), and a surface 13 of a lower portion of the bracket-shaped element 4 facing the insert 7 (FIG. 1) conforms at least partially to a shape of a surface 14 of a lower portion of the insert 7 (FIGS. 3 and 4). In this case, indentations 15 and 16 may be formed on the lower side of the outer surface of the bracket-shaped element 4 (FIG. 2), and an indentation 23 may be formed on the upper side thereof, while a second upper indentation is not shown in the drawings. This operation provides more reliable retention of the inserts 7, 9 in the bracket-shaped element 4.

The operation may be performed by pressing, stamping, or another known metal-forming method.

In a preferred embodiment, portions of the surface of the bracket-shaped element 4 are pressed into the inserts simultaneously with bending the first end 2 and the second end 3 of the blank 1, that is, simultaneously with forming the bracket-shaped element 4. The operation may be carried out using a die or by any other known method.

However, the pressing operations may alternatively be performed after forming the bracket-shaped element 4, or sequentially: first, one end is bent, then pressing is performed at that end, after which the same sequence is repeated at the opposite end of the blank 1.

In another embodiment of the invention, the blank 1 is heated before forming the bracket-shaped element 4. This makes it possible to increase the ductility of the metal and reduce resistance to deformation. In addition, heating the blank makes it possible to further increase the fixing force of the inserts 7, 9 in the bracket-shaped element 4, since, during cooling, the element 4 clamps the inserts due to thermal shrinkage.

In some embodiments of the invention, after forming the bracket-shaped element 4 with the inserts 7, 9, the resulting structure is hardened, which contributes to increased wear resistance of the connecting element of the track chain link.

An insert 7 suitable for carrying out the above-described embodiments of the method comprises a body 17 (FIG. 3) and a shank 8, wherein the body 17 has a concave surface 18 on one side and a convex surface 10 on an opposite side, and the shank 8 is disposed on the side of the convex surface 10. The insert 9 may be configured similarly.

The insert may be manufactured by forging, stamping, precision casting, powder metallurgy followed by hardening, or any other known method. Hardening may be performed after stamping or forging to increase wear resistance of the material of the insert.

In a preferred embodiment, the concave surface 18 and the convex surface 10 are each a portion of a cylindrical lateral surface.

In a preferred embodiment, the shank 8 is configured as a single element extending from the side of the convex surface 10 and is substantially rectilinear and has a rectangular cross section. However, the invention is not limited to this configuration of the shank. For example, the shank 8 may have another cross section, such as a circular, square, trapezoidal, or other cross section. In addition, dimensions of the cross section along a length of the shank may vary, for example, may increase or decrease. The shape of the shank may also be curvilinear, for example, zigzag-shaped or arcuate, or rectilinear, or the shank may be disposed at an angle to an axis of the insert.

In a preferred embodiment, the cross section of the shank 8 corresponds to a shape of the holes 5 and/or 6 of the blank 1. The rectangular shape of the hole 5 or 6, as well as the configuration of the shank 8 with a rectangular cross section, wherein a major axis of symmetry of the cross section is oriented along a major axis of symmetry of the blank 1, makes it possible, when bending the ends of the blank 1, to clamp the shank 8 in the hole 5 or 6 in an optimal manner due to deformation of the material.

In some embodiments of the invention, the insert 7 is configured with a shank in the form of a plurality of elements extending from the side of the convex surface 10. The insert 9 may be configured similarly. In this case, it is expedient to form holes at the ends of the blank 1 for each shank. However, in some embodiments of the invention, a plurality of elements of the shank may be positioned in one hole of the blank. Due to this solution, after bending the ends of the blank 1 around the inserts 7 and 9, the shanks of the inserts are clamped not only due to deformation of the shape of the holes 5 and 6 of the blank 1, but also additionally due to residual elastic expanding deformation of the shanks. During operation of the track chain, this makes it possible to at least partially compensate for weakening of the fixation of the inserts in the bracket-shaped element caused by fatigue of the metal.

In a preferred embodiment, the surface 12 of the upper portion of the insert 7 and/or the surface 14 of the lower portion of the insert have at least one recess 19 and 20, respectively (FIGS. 3 and 4). Other embodiments of the invention provide two or more recesses. The recesses are intended to form spaces that are filled with material of the blank 1 when the pressing operation is performed. As a result, an additional engagement is formed between the inserts 7, 9 and the bracket-shaped element 4, counteracting displacement of the inserts at a location of contact between the connecting element of the track chain link and a surface of the connecting link.

In a preferred embodiment, the inserts are made of a wear-resistant material, for example, spring steel such as 65G steel, also referred to as 65Mn steel, which makes it possible to further increase the service life of the connecting element.

The invention also relates to a connecting element of a track chain link, which may be manufactured by the above-described method and comprises the bracket-shaped element 4 formed by bending the first end 2 and the second end 3 of the elongated sheet metal blank 1. The bracket-shaped element 4 has at least one first hole 21 and at least one second hole 22 at opposite ends thereof (FIG. 1), wherein the shank 8 of the first insert 7 is positioned in the first hole 21 and the shank of the second insert 9 is positioned in the second hole 22. The first end 2 of the blank 1 is bent around the first insert 7, and the second end 3 of the blank 1 is bent around the second insert 9. The inserts 7 and 9 may be configured according to the above-described examples.

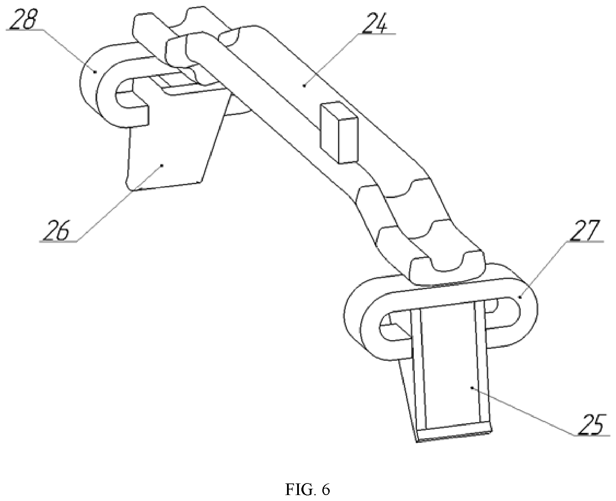

Using the above-described connecting element, a track chain link may be produced, the track chain link being configured to be connected to a plurality of track chain links to form a flexible track chain configured to be mounted around an outer periphery of a tire of a vehicle. The track chain link comprises a transverse element 24 (FIG. 6) extending across a tread surface of the tire, two lateral support elements 25, 26, and two connecting elements 27, 28. The lateral support elements 25, 26 are disposed at opposite ends of the transverse element 24, extend from the same side thereof, and are spaced apart to accommodate the tire therebetween. The connecting elements 27, 28 of such a link comprise the bracket-shaped element 4 formed by bending the first end 2 and the second end 3 of the elongated sheet metal blank 1. The bracket-shaped element 4 has at least one first hole 21 and at least one second hole 22 at opposite ends thereof, wherein the shank 8 of the first insert 7 is positioned in the first hole 21 and the shank of the second insert 9 is positioned in the second hole 22. The first end 2 of the blank 1 is bent around the first insert 7, and the second end 3 of the blank 1 is bent around the second insert 9.

Finally, a track chain configured to be mounted around an outer periphery of a tire of a vehicle may be formed by a plurality of the above-described track chain links connected to one another in series by connecting links.

The above-described track chain operates as follows. The track chain is mounted around the outer periphery of tires of a vehicle and is tensioned to a required level. When the track chain passes around wheels of the vehicle, relative rotation occurs between the track chain links and the connecting links. Surfaces of the connecting links rub against the concave surfaces of the inserts of the connecting elements of the track chain links. During operation, the inserts wear and are then replaced with new inserts.

Accordingly, the invention provides an increased service life of the track chain by thickening material of the connecting element of the track chain link at the location of contact with the connecting link; simplified repair of the track chain due to the possibility of using steels having good weldability for forming the connecting elements, and also due to the possibility of restoring the connecting elements by replacing worn inserts; and reduced material consumption and weight of the track chain without reducing its service life by thickening only contact areas of the connecting element with the connecting link and by enabling the use of relatively thinner material for manufacturing the blanks.

The invention is not limited to the embodiments described above. Various modifications may be made by a person of ordinary skill in the art without departing from the scope of the invention as defined by the claims.

### INDUSTRIAL APPLICABILITY

The invention can be used in the manufacture of track chain links for track chains designed for installation around the outer periphery of vehicle tires.

### PATENT LITERATURE

1: RU 2530947 "Track Link with Two Lateral Support Elements and a Method for Manufacturing a Support Element for Such a Track Link," filed May 12, 2010.

### NON-PATENT LITERATURE

1: UHI HD TRACK, http:/kluch-td.ru/catalog/track-tire/track-tire2_1653.html

## Claims

1. A method of manufacturing a connecting element of a track chain link, the method comprising:
providing an elongated blank made of sheet metal, the blank having a first end and a second end;
forming at least one first hole in the blank at the first end and at least one second hole in the blank at the second end;
positioning a first insert having a shank so that its shank is placed in the at least one first hole and positioning a second insert having a shank so that its shank is placed in the at least one second hole;
forming a bracket-shaped element by bending the first end of the blank around the first insert and bending the second end of the blank around the second insert.

2. The method of claim 1, further comprising pressing portions of a surface of the bracket-shaped element into the inserts such that a surface of an upper portion of the bracket-shaped element facing a respective insert conforms at least partially to a shape of a corresponding upper surface of the respective insert, and a surface of a lower portion of the bracket-shaped element facing the respective insert conforms at least partially to a shape of a corresponding lower surface of the respective insert.

3. The method of claim 2, wherein the pressing is performed simultaneously with bending the first end and the second end of the blank.

4. The method of claim 1, further comprising heating the blank prior to forming the bracket-shaped element.

5. An insert for use in the method of claim 1, the insert comprising a body and a shank,
wherein the body has a concave surface on one side and a convex surface on an opposite side, and the shank is disposed on the side of the convex surface.

6. The insert of claim 5, wherein the shank comprises a single protruding element extending from the convex surface.

7. The insert of claim 5, wherein the shank comprises a plurality of protruding elements extending from the convex surface.

8. The insert of claim 5, wherein an upper surface and/or a lower surface of the insert includes at least one recess.

9. The insert of claim 5, wherein the insert is made of a wear-resistant material.

10. A connecting element of a track chain link, comprising:
a bracket-shaped element formed by bending first and second ends of an elongated sheet metal blank, the bracket-shaped element having at least one first hole and at least one second hole at opposite ends thereof;
a first insert having a shank positioned in the at least one first hole and a second insert having a shank positioned in the at least one second hole,
wherein the first end is bent around the first insert and the second end is bent around the second insert.

11. A track chain link configured to be connected to a plurality of track chain links to form a flexible track chain configured to be mounted around an outer periphery of a tire of a vehicle, the track chain link comprising:
a transverse element extending across a tread surface of the tire;
two lateral support elements disposed at opposite ends of the transverse element and extending from the same side thereof and spaced apart to accommodate the tire therebetween; and
two connecting elements according to claim 10.

12. A track chain configured to be mounted around an outer periphery of a tire of a vehicle, the track chain comprising a plurality of track chain links according to claim 11 connected to one another in series by connecting links.
